# EUROPÄISCHE PATENTANMELDUNG

(11) **EP 4 782 079 A1**
(43) Veröffentlichungstag der Anmeldung: **29.07.2026**
(21) Anmeldenummer: 26153345.9
(22) Anmeldetag: 22.01.2026
(51) Int. Cl.: A63F 13/95

(54) **KARTENSPIELSYSTEM UND SPIELKARTE FÜR EIN KARTENSPIELSYSTEM**

(30) Priorität: 22.01.2025 DE 202025100309 U
(71) Anmelder: Unlimited Vibes UG (haftungsbeschränkt), 21107 Hamburg (DE)
(72) Erfinder: Diallo, Souleymane Baila, 21107 Hamburg (DE)
(74) Vertreter: RGTH

(57) **Zusammenfassung**

Kartenspielsystem (100) umfassend eine erste Anzahl von physischen Spielkarten (10) und eine erste Anzahl von auf einem Speichermedium abspeicherbaren virtuellen Spielkarten (11) und mindestens ein Lesegerät (13), wobei jede physische Spielkarte (10) einen mit dem Lesegerät (13) auslesbaren Transponder (15) aufweist, wobei das Lesegerät (13) eingerichtet ist, nach Auslesen des Transponders (15) einer physischen Spielkarte (10) eine virtuelle Spielkarte (11) zuzuordnen.

## Beschreibung

Die vorliegende Erfindung betrifft ein Kartenspielsystem umfassend eine erste Anzahl von physischen Spielkarten und eine erste Anzahl von auf einem Speichermedium abspeicherbaren virtuellen Spielkarten.

Ferner betrifft die vorliegende Erfindung eine Spielkarte für ein Spielkartensystem.

Kartenspielsysteme, insbesondere Sammelkartenspielsysteme, gibt es zu vielen Themenbereichen und in verschiedensten Ausgestaltungen. Sammelkartenspielsysteme können als Werbeplattform genutzt werden und eine Vielzahl von Spielern zusammenbringen.

Aus der US 2022/0327303 A1 ist eine Grußkarte mit einem abtastbaren Code mit einem eindeutigen Identifikator bekannt, der einen eindeutigen Standort in einem Computernetzwerk repräsentiert, wobei der eindeutige Ort eine erste Antwort mit einem ersten Satz von Daten umfasst.

### Darstellung der Erfindung: Aufgabe, Lösung, Vorteile

Der vorliegenden Erfindung liegt die Aufgabe zugrunde, ein Kartenspielsystem bereitzustellen, welches physische und virtuelle Spielkarten umfasst, wobei Spieler sowohl mit den physischen Karten als auch den virtuellen Karten im Spiel gegeneinander antreten können.

Zu Lösung der der Erfindung zugrundeliegenden Aufgabe wird ein Kartenspielsystem umfassend eine erste Anzahl von physischen Spielkarten und eine erste Anzahl von auf einem Speichermedium abspeicherbaren virtuellen Spielkarten und mindestens ein Lesegerät vorgeschlagen, wobei jede physische Spielkarte einen mit dem Lesegerät auslesbaren Transponder aufweist, wobei das Lesegerät eingerichtet ist, nach Auslesen des Transponders einer physischen Spielkarte eine virtuelle Spielkarte zuzuordnen.

Das Kartenspielsystem umfasst somit sowohl physische Spielkarten als auch virtuelle Spielkarten. Wesentlich ist, dass jede physische Spielkarte einen mit dem Lesegerät des Kartenspielsystems auslesbaren Transponder aufweist. Das Lesegerät ist eingerichtet, den Transponder auszulesen und nach Auslesen des Transponders einer physischen Spielkarte eine virtuelle Spielkarte zuzuordnen. Bei der virtuellen Spielkarte kann es sich insbesondere um einen digitalen Zwilling der physischen Spielkarte handeln. Aufgrund der Zuordnung von virtueller Spielkarte zu physischer Spielkarte kann das Kartenspielsystem sowohl mittels der physischen Spielkarten als auch mittels der virtuellen Spielkarten gespielt werden.

Die virtuellen Spielkarten sind insbesondere auf einem Speichermedium abspeicherbare Dateien.

Für die Zuordnung der virtuellen Spielkarten zu den physischen Spielkarten können die virtuellen Spielkarten bereits auf einem Speichermedium des Lesegeräts, beispielsweise eine Smartphones, gespeichert sein. Die Zuordnung kann dann ohne aktive Internetverbindung erfolgen. Ebenso ist es möglich, dass virtuelle Spielkarten für die Zuordnung zu den physischen Spielkarten, ausgelöst durch das Auslesen des Transponders, aus dem Internet bzw. von einem externen Server, heruntergeladen werden.

Bevorzugt ist vorgesehen, dass die physischen Spielkarten mit Informationen bedruckt sind.

Die Informationen umfassen dabei für das Spiel mit dem Kartenspielsystem notwendige Angaben. Ferner können die Informationen auch Informationen zur Häufigkeit bzw. Seltenheit der physischen und/oder virtuellen Spielkarte im Kartenspielsystem aufweisen.

Mit weiterem Vorteil kann vorgesehen sein, dass den virtuellen Spielkarten Daten zugeordnet sind, wobei die Daten bevorzugt den Informationen der zugeordneten physischen Spielkarten entsprechen.

Da die Daten der virtuellen Spielkarten den Informationen der physischen Spielkarten entsprechen, stellen die virtuellen Spielkarten digitale Zwillinge der physischen Spielkarten dar.

Mit weiterem Vorteil kann vorgesehen sein, dass die Informationen und/oder die Daten die Musikindustrie betreffen, wobei die physischen Spielkarten und die virtuellen Spielkarten Songkarten, Labelkarten und Taktik-Karten umfassen.

Das Kartenspielsystem ist somit insbesondere für Spieler geeignet, die sich für Musik oder die Musikindustrie interessieren.

Die Songkarten, Labelkarten und Taktik-Karten werden während des Spiels mit dem Kartenspielsystem entsprechend den Spielregeln des Kartenspielsystems eingesetzt.

Ferner können Eventkarten vorgesehen sein. Die Eventkarten können dabei entweder physische Spielkarten sein, und somit im Spielgeschehen verwendet werden. Bevorzugt ist aber vorgesehen, dass die Eventkarten nicht während des Spiels mit dem Kartenspielsystem eingesetzt und nicht im Spielgeschehen verwendet werden, sondern zu Werbezwecken dienen. So können durch Auslesen der Transponder der Eventkarten mittels des Lesegeräts Informationen zu Unternehmen, Produkten, Rabatten oder Gewinnspielen abgerufen werden.

Bevorzugt umfasst daher das Kartenspielsystem mindestens zwei, bevorzugt mehrere, Lesegeräte.

Somit können mehrere Spieler mittels der virtuellen Spielkarten gegeneinander antreten.

Bevorzugt ist vorgesehen, dass auf dem Lesegerät eine ausführbare Softwareapplikation (App) abgespeichert ist.

Dabei kann ferner vorgesehen sein, dass die ausführbare Softwareapplikation eingerichtet ist, die Daten mindestens zwei virtueller Spielkarten zwischen mindestens zwei Lesegeräten zu übermitteln, wobei die ausführbare Softwareapplikation bevorzugt eingerichtet ist, anhand eines Bewertungssystems mindestens eine virtuelle Spielkarte zu ermitteln.

Durch das Übermitteln der Daten mindestens zweier virtueller Spielkarten zwischen mindestens zwei Lesegeräten kann das Kartenspielsystem virtuell gespielt werden. Die Übermittlung der Daten kann über jede geeignete Datenverbindung erfolgen, beispielsweise über ein Mobilfunknetz, das Internet, Bluetooth, WLAN oder NFC.

Es kann vorgesehen sein, dass jeder der Spieler eine oder mehrere seiner virtuellen Spielkarten für die Durchführung eines Spielzugs auswählt und diese mittels der Softwareapplikation gegeneinander antreten lässt. Die Softwareapplikation ermittelt dann anhand des Bewertungssystems eine oder mehrere Spielkarten. Dabei kann es sich bei den ermittelten Spielkarten um jene Spielkarten handeln, welche auf Basis des Bewertungssystems als höherwertig eingestuft werden. Ein Spielzug kann dabei mehrere Phasen umfassen, in denen die Spieler jeweils eine oder mehrere Spielkarten auswählen, d.h. ausspielen. In jeder Phase oder erst am Ende des Spielzugs kann die Softwareapplikation anhand des Bewertungssystems die mindestens eine virtuelle Spielkarte ermitteln.

Es kann vorgesehen sein, dass am Ende jeder Phase, oder am Ende eines, gegebenenfalls mehrere Phasen umfassenden, Spielzuges, oder erst am Ende eines mehrere Spielzüge umfassenden Spiels, bevorzugt von der Software-Applikation, ein Sieger der Phase, des Spielzugs oder des Spiels ermittelt wird. Wird beispielsweise erst am Ende des Spielzuges ein Sieger des Spielzuges ermittelt, so bedeutet dies, dass in den Phasen des Spielzuges nicht notwendigerweise ein Sieger der jeweiligen Phase ermittelt werden muss, sondern dass der Sieger des Spielzuges anhand aller in den Phasen ausgespielten Spielkarten ermittelt wird. Wird bereits für jede Phase ein Sieger der Phase ermittelt, so kann die Spielmechanik dem bekannten Quartettspiel ähneln.

Insbesondere können das oder die Lesegeräte mittels der ausführbaren Softwareapplikation mit Spielern interagieren, alle für das Spiel relevanten Informationen, insbesondere der virtuellen Spielkarten, verarbeiten, und Spielzüge angeben beziehungsweise ausführen. Das Lesegerät kann als neutraler und unparteiischer Schiedsrichter während des Spiels agieren. Bevorzugt wählt die Softwareapplikation anhand eines Bewertungssystems eine Spielkarte aus. Im Spielkontext kann die ausgewählte Spielkarte jene Karte sein, die einen Spielzug gewinnt.

Bevorzugt ist vorgesehen, dass die ausführbare Softwareapplikation eingerichtet ist, nachdem mindestens ein Transponder einer physischen Spielkarte ausgelesen wurde, die Daten der der physischen Spielkarte zugeordneten virtuellen Spielkarte zwischen den mindestens zwei Lesegeräten zu übermitteln.

Somit kann die Übermittlung der Daten mindestens zweier virtueller Spielkarten zwischen den mindestens zwei Lesegeräten durch das Auslesen des Transponders einer physischen Spielkarte initiiert werden. Ein Spieler kann eine physische Spielkarten an das Lesegerät halten und die Spielzüge werden durch Übermittlung der virtuellen Spielkarten, insbesondere der digitalen Zwillinge, ausgeführt. Grundsätzlich ist es jedoch auch möglich, dass die Übermittlung der Daten der virtuellen Spielkarten durch eine Benutzereingabe in die Softwareapplikation, beispielsweise durch Berührung einer auf einem Bildschirm des Lesegeräts angezeigten Schaltfläche, eingeleitet wird. In diesem Fall ist das Spielen des Kartenspielsystems auch ohne die physischen Spielkarten möglich.

Bevorzugt kann mit dem Kartenspielsystem, insbesondere nach Zuordnung der virtuellen Spielkarten zu den physischen Spielkarten, nur unter Verwendung der physischen Spielkarten (Offline-Modus), oder nur unter Verwendung der virtuellen Spielkarten (Online-Modus) oder unter Verwendung der physischen Spielkarten und der virtuellen Spielkarten (Hybrid-Modus) gespielt werden.

Bevorzugt ist vorgesehen, dass die erste Anzahl von physischen Spielkarten gleich der ersten Anzahl von virtuellen Spielkarten ist, wobei die erste Anzahl vorbestimmt ist.

Die Menge der ersten Anzahl an physischen Spielkarten entspricht damit exakt der Menge der ersten Anzahl an virtuellen Spielkarten. Hierdurch wird sichergestellt, dass zu jeder physischen Spielkarte genau eine virtuelle Spielkarte gehört und umgekehrt. Dabei ist die erste Anzahl vorbestimmt. Mit anderen Worten kann, beispielsweise ein Herausgeber des Kartenspielsystems, die Menge an physischen Spielkarten und die virtuellen Spielkarten limitieren.

Grundsätzlich ist es auch möglich, dass die Anzahl der virtuellen Spielkarten größer ist als die Anzahl der physischen Spielkarten. In diesem Fall gibt es zu jeder physischen Spielkarte eine dieser zuordbare virtuelle Spielkarte, jedoch existiert nicht zu jeder virtuellen Spielkarte eine zuordbare physische Spielkarte.

Ferner können eine zweite Anzahl von physischen Spielkarten und eine zweite Anzahl von auf einem Speichermedium abspeicherbaren virtuellen Spielkarten vorgesehen sein, wobei die zweite Anzahl von physischen Spielkarten gleich der zweiten Anzahl von virtuellen Spielkarten ist, wobei die zweite Anzahl variabel ist.

Somit auch können neben der hinsichtlich deren Menge begrenzten ersten Anzahl von physischen Spielkarten und ersten Anzahl von virtuellen Spielkarten weitere physische Spielkarten und virtuelle Spielkarten vorgesehen sein. Dabei ist die Menge der zweiten Anzahl von physischen und virtuellen Spielkarten variabel und kann sich dynamisch ändern. Insbesondere kann die Menge der zweiten Anzahl von physischen Spielkarten und virtuellen Spielkarten vom Herausgeber des Kartenspielsystems regelmäßig angepasst werden.

Bevorzugt ist vorgesehen, dass der Transponder ein RFID-Transponder, insbesondere ein NFC-Transponder, ist.

Somit wird ein Auslesen des Transponders der physischen Spielkarten durch einfaches Anhalten der physischen Spielkarte an das Lesegerät ermöglicht.

Ferner kann vorgesehen sein, dass den virtuellen Spielkarten Non-Fungible-Tokens (NFT) zugeordnet sind, oder dass die virtuellen Spielkarten Non-Fungible-Tokens (NFT) sind.

Durch die Zuordnung von Non-Fungible-Tokens zu den virtuellen Spielkarten kann sichergestellt werden, dass die virtuellen Spielkarten nicht kopiert oder manipuliert werden können. Ferner ermöglicht die Zuordnung der virtuellen Spielkarten zu NFTs eine eindeutige Zuordnung der virtuellen Spielkarten zu einem Spieler. Zudem ermöglicht die Zuordnung von NFTs an die virtuellen Spielkarten eine Wertbestimmung der virtuellen Spielkarten, sodass virtuelle Spielkarten auf einem Transfermarkt zwischen Spielern gehandelt werden können.

Den virtuellen Spielkarten können die Non-Fungible-Tokens zugeordnet sein oder die virtuellen Spielkarten können die Non-Fungible-Tokens selbst sein. Somit kann entweder das NFT einen Verweis, insbesondere eine URL, auf die virtuelle Spielkarte beinhalten. Ferner kann aber auch die virtuelle Spielkarte insgesamt, das heißt inklusive der Daten der virtuellen Spielkarte, den NFT darstellen.

Bevorzugt ist vorgesehen, dass die Non-Fungible-Tokens in einer Blockchain gespeichert sind.

Ferner kann vorgesehen sein, dass die Daten in der Blockchain abgespeichert sind. In diesem Fall ist somit die gesamte virtuelle Spielkarte umfassend die zugehörigen Daten in der Blockchain abgespeichert und die virtuelle Spielkarte ist das NFT.

Mit weiterem Vorteil kann vorgesehen sein, dass die Daten auf einem Speichermedium, bevorzugt eines Servers oder des Lesegeräts, abgespeichert sind.

Bevorzugt kann vorgesehen sein, dass die Daten aller virtuellen Spielkarten bereits auf dem Lesegerät, dass heißt in der Softwareapplikation des Lesegerätes, vorhanden sind. Somit ist ein Herunterladen der virtuellen Spielkarten von einer externen Quelle nicht notwendig. In dieser Ausgestaltung wird somit nach dem Auslesen des Transponders die entsprechende bereits auf dem Lesegerät abgespeicherte virtuelle Spielkarte freigeschaltet, und der physischen Spielkarte zugeordnet.

Bevorzugt ist vorgesehen, dass das Lesegerät eingerichtet ist, nach Auslesen des Transponders einer physischen Spielkarte, eine Mediendatei, insbesondere eine Audiodatei, wiederzugegeben.

Die Mediendatei kann insbesondere eine Audiodatei sein. Dies ist insbesondere von Vorteil, wenn die Informationen der Spielkarten die Musikindustrie betreffen. Beispielsweise kann der Transponder einer Songkarte von dem Lesegerät ausgelesen werden und es kann von dem Lesegerät eine Audiodatei des Songs ausgegeben werden.

Bevorzugt ist dabei vorgesehen, dass die Mediendatei von einem Streaming-Dienst abgerufen wird.

Mit weiterem Vorteil ist vorgesehen, dass das Lesegerät ein mobiles Datenverarbeitungsgerät, insbesondere ein Smartphone, ein Tablet oder eine Smartwatch, ist.

Mit weiterem Vorteil kann vorgesehen sein, dass das Kartenspielsystem eine Rechenvorrichtung, insbesondere einen Server, umfasst, wobei die Rechenvorrichtung eingerichtet ist, eine Vielzahl von Spieleraccounts zu verwalten.

Besonders bevorzugt ist es hierbei, dass es sich bei der Rechenvorrichtung um einen, insbesondere externen, Server handelt. Auf dem Server werden eine Vielzahl von Spieleraccounts verwaltet. Spieler, die die Softwareapplikation auf ihrem Lesegerät, insbesondere einem Smartphone, abgespeichert haben, können einen Spieleraccount auf dem Server einrichten. Über den Spielaccount können virtuelle Spielkarten zwischen Spielern gehandelt werden.

Somit ist insbesondere bevorzugt vorgesehen, dass die Softwareapplikation und/oder die Rechenvorrichtung eingerichtet ist, die virtuellen Spielkarten, insbesondere die Non-Fungible-Tokens, zwischen Lesegeräten und/oder Spieleraccounts zu transferieren.

Eine noch weitere Lösung der der Erfindung zugrundeliegenden Aufgabe besteht in der Bereitstellung einer Spielkarte, insbesondere einer physischen Spielkarte, für ein vorbeschriebenes Kartenspielsystem.

Bei der Spielkarte handelt es sich insbesondere um eine physische Spielkarte. Die Spielkarte kann gemäß einer der physischen Spielkarten des vorbeschriebenen Kartenspielsystems ausgebildet sein. Insbesondere bevorzugt ist die physische Spielkarte mit Informationen bedruckt. Weiter bevorzugt umfasst die physische Spielkarte einen mit einem Lesegerät auslesbaren Transponder. Der Transponder ist bevorzugt ein RFID-Transponder, insbesondere ein NFC-Transponder.

Eine noch weitere Lösung der der Erfindung zugrundeliegenden Aufgabe besteht in einer Softwareapplikation geeignet für ein vorbeschriebenes Kartenspielsystem.

Eine weitere Lösung der der Erfindung zugrundeliegenden Aufgabe besteht in einem Verfahren zur Durchführung eines Kartenspiels mit einem vorbeschriebenen Kartenspielsystem, umfassend die Schritte Auslesen des Transponders mindestens einer der physischen Spielkarten mittels des Lesegeräts und Zuordnen einer der virtuellen Spielkarten zu der mindestens einen physischen Spielkarte durch das Lesegerät.

Sämtliche Merkmale, Eigenschaften oder Funktionen des vorstehend beschriebenen Kartenspielsystems können in analoger Weise auch auf das Verfahren übertragen werden.

Bevorzugt ist daher vorgesehen, dass auf dem Lesegerät eine ausführbare Softwareapplikation abgespeichert ist, wobei die Softwareapplikation nach dem Auslesen des Transponders der physischen Spielkarte die virtuelle Spielkarte zuordnet.

Die physischen Spielkarten können mit Informationen bedruckt sein. Den virtuellen Spielkarten können Daten zugeordnet sein, wobei die Daten den Informationen der zugeordneten physischen Spielkarten entsprechen.

Zudem kann vorgesehen sein, dass die Softwareapplikation die Daten mindestens zwei virtueller Spielkarten zwischen mindestens zwei Lesegeräten übermittelt, und dass die ausführbare Softwareapplikation anhand eines Bewertungssystems mindestens eine virtuelle Spielkarte ermittelt.

### Kurze Beschreibung der Figuren

Die Erfindung wird nachstehend näher anhand der beigefügten Figur erläutert.

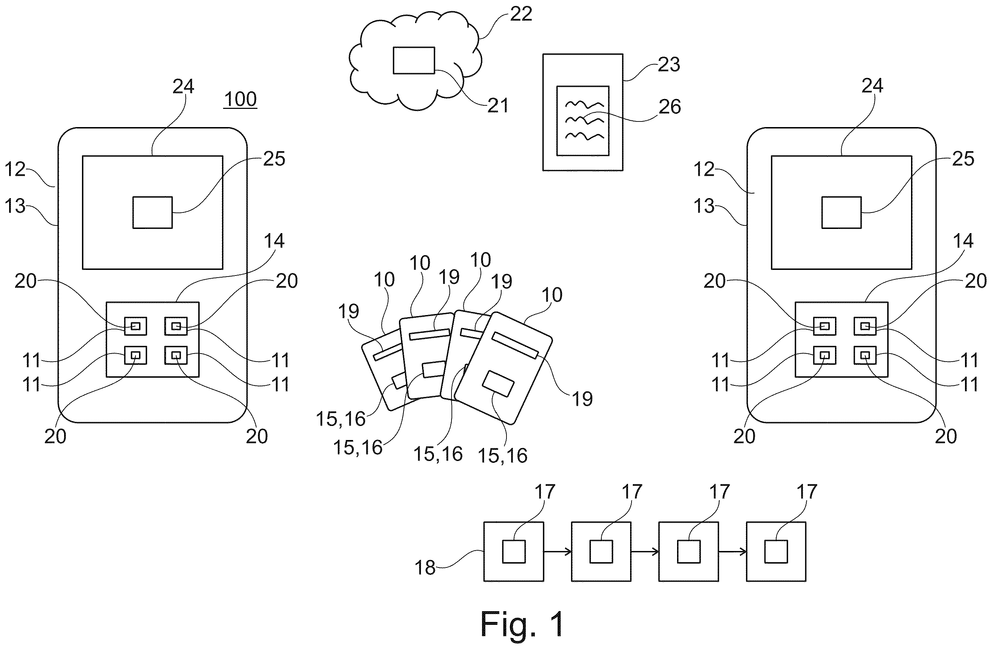

Fig. 1 zeigt ein Kartenspielsystem.

### Ausführliche Beschreibung der Figuren

Fig. 1 zeigt ein Kartenspielsystem 100. Das Kartenspielsystem 100 umfasst eine erste Anzahl von physischen Spielkarten 10 und eine erste Anzahl virtuellen Spielkarten 11. Die virtuellen Spielkarten 11 sind in einer auf als Smartphones 12 ausgebildeten Lesegeräten 13 gespeicherten Softwareapplikation 14 hinterlegt.

Jede der physischen Spielkarten 10 umfasst einen mit den Lesegeräten auslesbaren Transponder 15, welcher als NFC-Transponder 16 ausgebildet ist.

Mittels der Lesegeräte 13 können die Transponder 15 der physischen Spielkarten 10 ausgelesen werden, wenn die physischen Spielkarten 10 an das Lesegerät 13 angehalten werden. Wird ein Transponder 15 einer physischen Spielkarte 10 mit einem Lesegerät 13 ausgelesen, so verknüpft die Softwareapplikation 14 die virtuelle Spielkarte 11 mit der entsprechenden physischen Spielkarte 10. Jeder virtuellen Spielkarte 11 ist zudem ein Non-Fungible-Token 17 (NFT) zugeordnet, wobei der NFT 17 in einer Blockchain 18 abgespeichert wird. Hierdurch kann der Eigentümer jeder virtuellen Spielkarte 11 zweifelsfrei festgestellt werden. Zudem können unerlaubte Kopien oder Duplikate von virtuellen Spielkarten 11 unterbunden werden. Ferner wird durch die Zuordnung des NFTs 17 zu den virtuellen Spielkarte 11 ein Handeln der virtuellen Spielkarten 11 zwischen Spielern möglich.

Die physischen Spielkarten 10 sind mit Informationen 19 bedruckt, wobei die Informationen 19 die Musikindustrie betreffen. Die virtuellen Spielkarten 11 umfassen Daten 20, wobei die Daten den Informationen 19 der zugeordneten physischen Spielkarten 10 entsprechen. Wird ein Transponder 15 einer physischen Spielkarte 10 ausgelesen, so wird ferner von dem jeweiligen Lesegerät 13 eine Audiodatei 21 wiedergegeben. Die Audiodatei 21 wird von einem Streaming-Dienst 22 abgerufen. Das Kartenspielsystem 100 umfasst ferner einen externen Server 23, auf welchem Spieleraccounts 26 verwaltet werden. Der Server 23 kann ferner den Handel der virtuellen Spielkarten 11 und/oder der physischen Spielkarten 10 zwischen Spielern unterstützen.

Zum Spiel des Kartenspielsystems 100 können Spieler den Transponder 15 einer physischen Karte 10 auslesen, woraufhin die Softwareapplikation 14 die Daten 20 der zugeordneten virtuellen Karte 11 zwischen den Lesegeräten 13 der Spieler übermittelt. Die auf den Lesegeräten 13 abgespeicherte Softwareapplikation 14 interagiert dann mit den Spielern, verarbeitet alle für das Spiel relevanten Daten 20 der virtuellen Spielkarten 11 und führt Spielzüge aus. Die Lesegeräte 13 agieren somit als neutrale und unparteiische Schiedsrichter während des Spiels. Alternativ oder zusätzlich kann die Übermittlung der Daten 20 zwischen den Lesegeräten 13 auch durch eine Benutzereingabe in die Softwareapplikation 14, beispielsweise durch Berührung einer auf einem Bildschirm 24 der Lesegeräte 13 angezeigten Schaltfläche 25, eingeleitet werden.

### Liste der Bezugszeichen

- 100: Kartenspielsystem

- 10: Physische Spielkarte
- 11: Virtuelle Spielkarte
- 12: Smartphone
- 13: Lesegerät
- 14: Softwareapplikation
- 15: Transponder
- 16: NFC-Transponder
- 17: NFT
- 18: Blockchain
- 19: Informationen
- 20: Daten
- 21: Audiodatei
- 22: Streaming-Dienst
- 23: Externer Server
- 24: Bildschirm
- 25: Schaltfläche
- 26: Spieleraccount

## Patentansprüche

1. Kartenspielsystem (100) umfassend eine erste Anzahl von physischen Spielkarten (10) und eine erste Anzahl von auf einem Speichermedium abspeicherbaren virtuellen Spielkarten (11) und mindestens ein Lesegerät (13), wobei jede physische Spielkarte (10) einen mit dem Lesegerät (13) auslesbaren Transponder (15) aufweist, wobei das Lesegerät (13) eingerichtet ist, nach Auslesen des Transponders (15) einer physischen Spielkarte (10) eine virtuelle Spielkarte (11) zuzuordnen.

2. Kartenspielsystem (100) nach Anspruch 1, **dadurch gekennzeichnet, dass** die physischen Spielkarten (10) mit Informationen (19) bedruckt sind, wobei den virtuellen Spielkarten (11) bevorzugterweise Daten (20) zugeordnet sind, wobei die Daten (20) bevorzugt den Informationen (19) der zugeordneten physischen Spielkarten (10) entsprechen.

3. Kartenspielsystem (100) nach Anspruch 2, **dadurch gekennzeichnet, dass** die Informationen (19) und/oder die Daten (20) die Musikindustrie betreffen, wobei die physischen Spielkarten (10) und die virtuellen Spielkarten (11) Songkarten, Labelkarten und Taktik-Karten umfassen.

4. Kartenspielsystem (100) nach einem der vorgenannten Ansprüche, **dadurch gekennzeichnet, dass** auf dem Lesegerät (13) eine ausführbare Softwareapplikation (14) abgespeichert ist, wobei die Softwareapplikation (14) eingerichtet ist, nach Auslesen des Transponders (15) einer physischen Spielkarte (10) eine virtuelle Spielkarte (11) zuzuordnen, wobei die ausführbare Softwareapplikation (14) bevorzugterweise derart eingerichtet ist, die Daten (20) mindestens zwei virtueller Spielkarten (11) zwischen mindestens zwei Lesegeräten (13) zu übermitteln, wobei die ausführbare Softwareapplikation (14) bevorzugt eingerichtet ist, anhand eines Bewertungssystems mindestens eine virtuelle Spielkarte (11) zu ermitteln wobei die ausführbare Softwareapplikation (14) vorzugsweise eingerichtet ist, nachdem mindestens ein Transponder (15) einer physischen Spielkarte (10) ausgelesen wurde, die Daten (20) der der physischen Spielkarte (10) zugeordneten virtuellen Spielkarte (11) zwischen den mindestens zwei Lesegeräten (13) zu übermitteln.

5. Kartenspielsystem (100) nach einem der vorgenannten Ansprüche, **dadurch gekennzeichnet, dass** die erste Anzahl von physischen Spielkarten (10) gleich der ersten Anzahl von virtuellen Spielkarten (11) ist, wobei die erste Anzahl vorbestimmt ist; und/oder
dass eine zweite Anzahl von physischen Spielkarten (10) und eine zweite Anzahl von auf einem Speichermedium abspeicherbaren virtuellen Spielkarten (11) vorgesehen sind, wobei die zweite Anzahl von physischen Spielkarten (10) gleich der zweiten Anzahl von virtuellen Spielkarten (11) ist, wobei die zweite Anzahl variabel ist.

6. Kartenspielsystem (100) nach einem der vorgenannten Ansprüche, **dadurch gekennzeichnet, dass** der Transponder (15) ein RFID-Transponder, insbesondere ein NFC-Transponder (16), ist; und/oder
dass den virtuellen Spielkarten (11) Non-Fungible-Tokens (17) (NFT) zugeordnet sind, oder dass die virtuellen Spielkarten (11) Non-Fungible-Tokens (17) (NFT) sind, wobei die Non-Fungible-Tokens (17) vorzugsweise in einer Blockchain (18) gespeichert sind, wobei die Daten (20) vorzugsweise in der Blockchain (18) abgespeichert sind.

7. Kartenspielsystem (100) nach einem der Ansprüche 2 bis 6, **dadurch gekennzeichnet, dass** die Daten (20) auf einem Speichermedium, bevorzugt eines Servers (23) oder des Lesegeräts (13), abgespeichert sind.

8. Kartenspielsystem (100) nach einem der vorgenannten Ansprüche, **dadurch gekennzeichnet, dass** das Lesegerät (13) eingerichtet ist, nach Auslesen des Transponders (15) einer physischen Spielkarte (10) eine Mediendatei, insbesondere eine Audiodatei (21), wiederzugegeben, wobei die Mediendatei vorzugsweise von einem Streaming-Dienst (21) abgerufen wird; und/oder
dass das Lesegerät (13) ein mobiles Datenverarbeitungsgerät, insbesondere ein Smartphone (12), ein Tablet oder eine Smartwatch, ist; und/oder
dass das Kartenspielsystem (100) eine Rechenvorrichtung, insbesondere einen Server (23), umfasst, wobei die Rechenvorrichtung eingerichtet ist, eine Vielzahl von Spieleraccounts (26) zu verwalten.

9. Kartenspielsystem (100) nach einem der Ansprüche 4 bis 8, **dadurch gekennzeichnet, dass** die Softwareapplikation (14) und/oder die Rechenvorrichtung eingerichtet ist, die virtuellen Spielkarten (11), insbesondere die Non-Fungible-Tokens (17), zwischen Lesegeräten (13) und/oder Spieleraccounts (26) zu transferieren.

10. Spielkarte (10, 11), insbesondere physische Spielkarte (10), für ein Kartenspielsystem (100) nach einem der vorgenannten Ansprüche.

11. Softwareapplikation (14) für ein Kartenspielsystem (100) nach einem der Ansprüche 1 bis 9.

12. Verfahren zur Durchführung eines Kartenspiels mit einem Kartenspielsystem (100) nach einem der Ansprüche 1 bis 9, umfassend die Schritte Auslesen des Transponders (15) mindestens einer der physischen Spielkarten (10) mittels des Lesegeräts (13) und Zuordnen einer der virtuellen Spielkarten (11) zu der mindestens einen physischen Spielkarte (10) durch das Lesegerät (13).

13. Verfahren nach Anspruch 12, wobei auf dem Lesegerät (13) eine ausführbare Softwareapplikation (14) abgespeichert ist, wobei die Softwareapplikation (14) nach dem Auslesen des Transponders (15) der physischen Spielkarte (10) die virtuelle Spielkarte (11) zuordnet.

14. Verfahren nach Anspruch 12 oder 13, wobei die physischen Spielkarten (10) mit Informationen (19) bedruckt sind, wobei den virtuellen Spielkarten (11) Daten (20) zugeordnet sind, wobei die Daten (20) bevorzugt den Informationen (19) der zugeordneten physischen Spielkarten (10) entsprechen.

15. Verfahren nach Anspruch 14, wobei die Softwareapplikation (14) vorzugsweise die Daten (20) mindestens zwei virtueller Spielkarten (11) zwischen mindestens zwei Lesegeräten (13) übermittelt, und wobei die ausführbare Softwareapplikation (14) anhand eines Bewertungssystems vorzugsweise mindestens eine virtuelle Spielkarte (11) ermittelt.
